# FASCICULE DE BREVET EUROPEEN

(11) **EP 1 492 312 B1**
(45) Date de publication et mention de la délivrance du brevet: **29.11.2006**
(21) Numéro de dépôt: 04291405.1
(22) Date de dépôt: 04.06.2004
(51) Int. Cl.: H04M 1/02, H04M 1/82, H04M 19/04

(54) **Dispositif de génération d'alertes perceptibles par un utilisateur d'appareil téléphonique**
Vorrichtung zur Erzeugung von durch Telephoniebenutzer vernehmbaren Alarmen
Telephony user perceptible alerts generation device

(30) Priorité: 25.06.2003 FR 0307693
(43) Date de publication de la demande: 29.12.2004
(73) Titulaire: FRANCE TELECOM, 75015 Paris (FR)
(72) Inventeur: Vacquie, Luc, 31380 Saint Jean l'Herm (FR); Berge, Jean-Michel, 38330 Saint Nazaire les Eymes (FR)
(74) Mandataire: Habasque, Etienne J. Jean-François

(56) Documents cités:
- EP-A- 0 918 429
- WO-A-91/12685
- WO-A-98/25397
- GB-A- 2 328 109
- US-A- 5 590 185
- US-A- 5 812 648
- US-B1- 6 289 084

## Description

La présente invention concerne un dispositif de génération d'alertes perceptibles par un utilisateur du type raccordable en série entre un réseau téléphonique et un équipement téléphonique et un système correspondant.

De manière classique les équipements téléphoniques destinés à être utilisés sur un réseau téléphonique, tel que le réseau déployé en France et connu sous le nom de réseau téléphonique commuté ou RTC, disposent de moyens de génération d'alertes perceptibles par un utilisateur.

Par exemple, ces moyens de génération d'alertes sont formés d'une sonnerie ou d'un voyant lumineux et sont mis en oeuvre en fonction d'instructions de génération d'alertes provenant du réseau.

Ainsi, le standard RTC prévoie qu'une tension d'alimentation continue de 48 volts soit maintenue sur le réseau pour l'alimentation des équipements téléphoniques, tandis qu'une tension sinusoïdale de 70 volts formant instruction de génération d'alertes, est détectée par les équipements téléphoniques pour la génération d'une alerte.

Cependant, les moyens de génération d'alertes intégrés dans les équipements téléphoniques standards sont souvent d'une fonctionnalité limitée et notamment ne permettent que le choix d'une sonnerie parmi une pluralité de sonneries pré-enregistrées, la sonnerie sélectionnée étant jouée systématiquement de manière identique.

La modification des moyens de génération d'alertes afin de rendre le système plus convivial nécessiterait le remplacement des équipements existants par des équipements haut de gamme, entraînant ainsi un surcoût important.

Il apparaît donc que les systèmes de génération d'alertes existants sont peu conviviaux et peu adaptables.

Le document GB-A-2 328 109 décrit un dispositif de génération d'alertes conforme au préambule de la revendication 1, qui tente de remédier à ces inconvénients sans y parvenir totalement.

En effet, un tel dispositif de génération d'alertes ne permet pas à un utilisateur d'accéder à des informations de signalisation précédant les instructions de génération d'alertes.

Le but de la présente invention est de remédier à ces problèmes en définissant un dispositif de génération d'alertes et un système correspondant permettant la génération d'alertes de manière conviviale et peu coûteuse.

L'invention a donc pour objet un dispositif de génération d'alertes selon la revendication 1.

Selon d'autres modes de réalisation, lesdits moyens de filtrage sont adaptés pour empêcher la transmission desdites instructions prédéterminées de génération d'alertes vers ledit équipement afin de permettre la génération d'alertes uniquement par lesdits seconds moyens de génération d'alertes dudit dispositif.

Ceci permet notamment d'empêcher la transmission des instructions de génération d'alertes aux premiers moyens de génération d'alertes inhibant ainsi leur fonctionnement.

Selon encore d'autres modes de réalisation lesdits moyens de filtrage_comportent des moyens de génération de signaux de commandes dudit équipement afin de permettre la transmission de signaux de commandes vers ledit équipement consécutivement à la réception et au filtrage desdites instructions prédéterminées de génération d'alertes.

Ceci a pour effet de permettre la commande de l'équipement téléphonique en fonction des instructions de génération d'alertes reçues.

Selon d'autres modes de réalisation:
- lesdits moyens de filtrage sont adaptés pour permettre la transmission d'informations de signalisation entre ledit réseau et ledit équipement ;
- lesdits moyens de filtrage comportent des moyens formant interrupteur commandable entre ledit réseau et ledit équipement et des moyens de détection desdites instructions prédéterminées de génération d'alertes reliés auxdits moyens formant interrupteur afin d'interrompre le raccordement entre ledit réseau et ledit équipement consécutivement à la détection de telles instructions, les moyens de détection étant en outre aptes à identifier les informations de signalisation afin d'interrompre le raccordement entre le réseau (2) et l'équipement téléphonique (4) ;
- lesdits moyens de filtrage comportent des moyens formant interrupteur commandable entre ledit réseau et ledit équipement téléphonique et des moyens de détection de l'utilisation dudit équipement reliés auxdits moyens de raccordement afin de permettre le raccordement dudit équipement audit réseau lors de la détection de l'utilisation dudit équipement.

Ceci permet l'utilisation normale de l'équipement téléphonique notamment pour l'émission d'appels et les échanges d'informations de voix.

Selon d'autres modes de réalisation :
- le dispositif comporte des moyens paramétrables de pilotage du fonctionnement desdits seconds moyens de génération d'alertes;
- le dispositif comporte des moyens d'identification d'un appelant adaptés pour identifier ledit équipement, afin de permettre la détermination de paramètres de fonctionnement desdits seconds moyens de génération d'alertes à partir dudit équipement ;
- le dispositif comporte des moyens d'identification d'un appelant et des moyens de communication à distance afin de permettre des échanges d'informations au moyen dudit réseau avec un ou plusieurs équipements distants déterminés pour la détermination de paramètres de fonctionnement desdits seconds moyens de génération d'alertes ;
- le dispositif comporte des moyens de génération d'une référence temporelle pour le pilotage de son fonctionnement en fonction de cette référence temporelle ;
- le dispositif comporte des moyens d'analyse du contexte d'appel adaptés pour déterminer des paramètres de pilotage du fonctionnement desdits seconds moyens de génération d'alertes par l'analyse du contexte d'appel des appels émis et/ou reçus
- le dispositif comporte des moyens d'émission d'alertes sonores, visuelles, olfactives et/ou tactiles ;
- lesdits seconds moyens de génération d'alertes comportent une mémoire de sonneries comprenant une ou plusieurs sonneries pouvant être lues par des moyens d'émission d'alertes sonores.

Selon d'autres modes de réalisation:
- le dispositif est adapté pour être alimenté en énergie électrique uniquement à partir dudit réseau téléphonique ;
- le dispositif comporte une batterie rechargeable, destinée à fournir un complément de puissance pour son fonctionnement et connectée audit réseau téléphonique pour sa recharge.

Ceci permet notamment la réalisation du dispositif sous un format réduit ainsi qu'une installation aisée.

Enfin, selon un autre mode de réalisation de l'invention, le dispositif est intégré dans une prise téléphonique gigogne.

L'invention porte également sur un système de génération d'alertes perceptibles par un utilisateur du type comprenant un réseau téléphonique et un équipement téléphonique, caractérisé en ce qu'il comporte un dispositif de génération d'alertes tel que décrit précédemment raccordé en série entre ledit réseau et ledit équipement.

L'invention sera mieux comprise à la lecture de la description qui va suivre, donnée uniquement à titre d'exemple et faite en se référant aux dessins annexés, sur lesquels :
- la figure 1 représente un schéma général d'un système selon l'invention ; et
- la figure 2 représente un schéma bloc détaillé d'un mode de réalisation d'un dispositif selon l'invention.

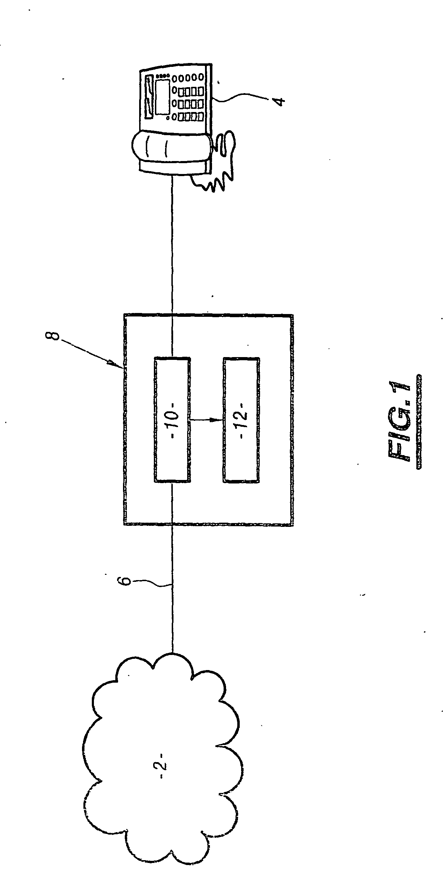

Le système représenté sur la figure 1, comporte un réseau téléphonique 2 de type commuté, tel que le réseau public déployé en France et connu sous le nom RTC.

Un équipement téléphonique standard 4 est raccordé à ce réseau 2 et comporte des premiers moyens de génération d'alertes formés, par exemple, d'une sonnerie électromécanique ou électronique.

De manière classique, le réseau 2 est prévu pour véhiculer sur des paires torsadées, telle que la paire notée 6, une tension d'alimentation continue de l'ordre de 48 volts et des instructions de génération d'alertes sous la forme d'impulsions de tension alternative de l'ordre de 70 volts.

Dans un système selon l'état de l'art, lors de la réception de telles impulsions, les premiers moyens de génération d'alertes intégrés dans le téléphone 4 entrent en fonctionnement de manière à générer, par exemple, une alerte sonore.

Selon l'invention, le système comporte un dispositif de génération d'alertes 8 raccordé en série entre l'équipement téléphonique 4 et le réseau 2.

Ce dispositif de génération d'alertes 8 comporte des moyens de filtrage 10 des informations circulant entre le réseau 2 et l'équipement 4 dont le fonctionnement sera détaillé plus loin, et des seconds moyens 12 de génération d'alertes perceptibles par un utilisateur, distincts des premiers intégrés dans l'équipement téléphonique 4.

En fonctionnement, les moyens de filtrage 10 sont adaptés pour extraire des informations circulant entre le réseau 2 et l'équipement téléphonique 4, au moins les informations d'alertes destinées à l'équipement téléphonique 4 et les transmettre aux seconds moyens 12 de génération d'alertes.

Seuls ces derniers entrent alors en fonctionnement en remplacement de ceux compris dans l'équipement téléphonique 4.

Les moyens de filtrage 10 sont cependant adaptés pour permettre la transmission normale d'autres informations entre le réseau 2 et l'équipement 4, et notamment la transmission d'informations de voix et de signalisation.

Le dispositif 8 permet ainsi de substituer totalement aux premiers moyens de génération d'alertes de l'équipement 4, les seconds moyens 12 de génération d'alertes. Cependant, seuls les premiers moyens de génération d'alertes sont inhibés, les autres fonctionnalités de l'équipement 4 étant préservées.

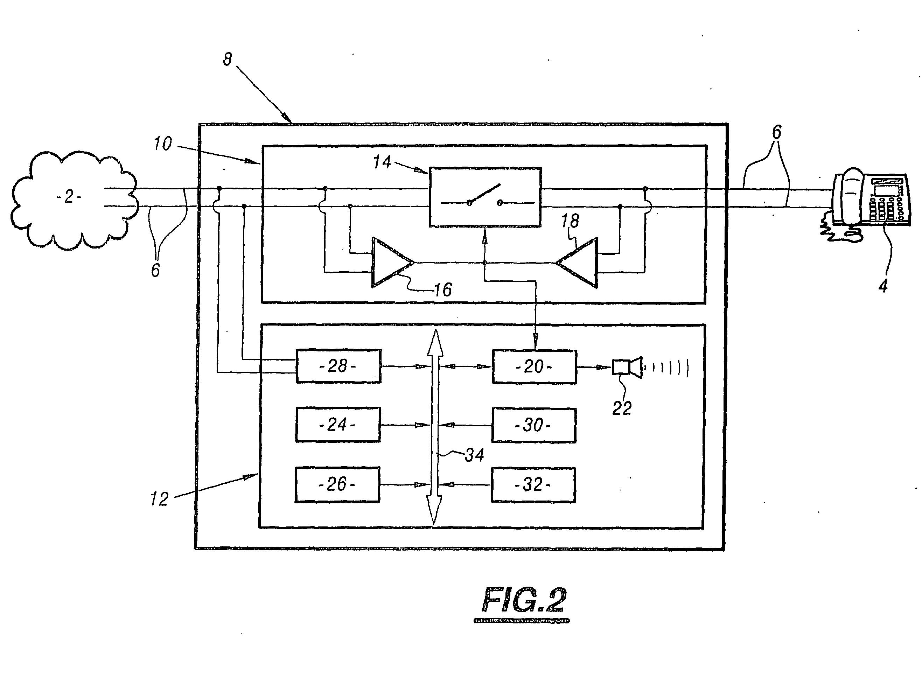

Ces seconds moyens 12 de génération d'alertes permettent d'accroître la convivialité du système en fournissant de nouvelles fonctionnalités par rapport à l'équipement 4 ainsi que cela va être décrit en référence à la figure 2.

De même, l'installation aisée et le remplacement peu coûteux du dispositif 8 accroissent encore la convivialité du système.

En référence à la figure 2, on va maintenant décrire le détail d'un tel dispositif de génération d'alertes.

On reconnaît sur cette figure les moyens 10 de filtrage des informations reçues. Ceux-ci comportent un relais commandable 14 formant interrupteur et disposé en série sur la paire torsadée 6 de manière à pouvoir commander le raccordement entre l'équipement 4 et le réseau 2.

Les moyens 10 comportent un module 16 de détection d'instructions de génération d'alertes adapté pour détecter la présence d'instructions de génération d'alertes sur la paire torsadée 6 et commander le relais 14 en conséquence pour interrompre le raccordement entre l'équipement 4 et le réseau 2.

Par exemple, le module de détection 16 comprend un amplificateur opérationnel et des composants périphériques raccordés de manière à détecter la présence d'un signal sinusoïdal de 70 volts, par exemple par la détection du franchissement d'un seuil par la tension redressée de façon classique.

Les moyens 10 de filtrage comportent également un module 18 de détection de prise de ligne adapté pour détecter l'utilisation de l'équipement 4 et commander le relais 14 en conséquence afin de permettre le raccordement entre l'équipement 4 et le réseau 2.

Par exemple, le module 18 comprend un amplificateur opérationnel et des composants périphériques raccordés de manière à détecter une prise de ligne grâce aux variations d'impédance sur la paire torsadée reliant le dispositif 8 à l'équipement 4.

Par ailleurs, les seconds moyens 12 de génération d'alertes comportent un module paramétrable de pilotage 20 de leur fonctionnement relié à la sortie des modules 16 de détection d'instructions de génération d'alertes et 18 de détection de prise de ligne.

De plus, le module 20 est relié à un haut-parleur 22 pour en commander le fonctionnement.

Un tel module 20 de pilotage est réalisé par exemple, sous la forme d'un micro-contrôleur ou d'un ensemble de circuits logiques afin de permettre le pilotage du haut-parleur 22 en fonction de paramètres définis notamment par un utilisateur.

Les seconds moyens 12 de génération d'alertes comportent également un module de communication 24 formé par exemple, d'un modem réalisé de manière classique et adapté pour les échanges d'informations selon différents protocoles connus, lui même relié à une mémoire de sonneries 26 comportant une ou plusieurs sonneries.

En variante, le module de communication 24 est formé d'un démodulateur de type dit FSK (Frequency Shift Key), tel que le composant CMX 602 B de la société Consumer Microcircuits Limited, plus simple et nécessitant moins d'apport en énergie électrique.

En outre, les seconds moyens 12 de génération d'alertes comportent un module 28 d'identification d'un appelant relié à la paire torsadée 6 et au module de pilotage 20.

Par exemple, ce module 28 est formé d'un composant logique tel que le composant CMX 612 de la société Consumer Microcircuits Limited, adapté pour décoder les trames de signalisation circulant sur le réseau 2 afin d'en extraire les informations d'identification d'un appelant.

Avantageusement, les seconds moyens 12 de génération d'alertes comportent également une horloge 30 fournissant un signal de référence temporelle et une mémoire 32 contenant des paramètres de fonctionnement et notamment des indications de niveau de sonnerie en fonction de l'heure, ou encore de choix de sonnerie en fonction du numéro d'appelant ou autres.

Dans le mode de réalisation décrit, les différents composants des seconds moyens 12 communiquent entre eux par l'intermédiaire d'un bus d'informations 34.

On va maintenant décrire le fonctionnement de ce dispositif qui débute par son paramétrage par un utilisateur.

Par exemple, des paramètres de fonctionnement sont déterminés par un utilisateur à partir de l'équipement 4.

Pour cela, l'utilisateur décroche l'équipement 4 ce qui est détecté par le module 18 de détection de prise de ligne qui commande le relais 14 afin de permettre le raccordement entre l'équipement 4 et le réseau 2.

En suivant un plan de numérotation spécifique au paramétrage du dispositif 8, l'utilisateur de l'équipement 4 peut utiliser le clavier de cet équipement afin de définir des paramètres de fonctionnement du dispositif 8 par l'intermédiaire de signaux dits DTMF (Dual Tone Multi-Function). Par exemple, l'utilisateur enregistre dans la mémoire 32 des indications de niveau de sonnerie en fonction de l'heure de l'appel ou du jour de la semaine, un nombre maximum de sonneries, et tout autre paramètre de fonctionnement approprié.

Par exempte, le plan de numérotation permettant un tel paramétrage débute par la répétition d'une touche dièse « # » du clavier de l'équipement 4 qui sera détectée par le module 28 d'identification de l'appelant de manière à mettre en relation l'équipement 4 et la mémoire de paramètres de fonctionnement 32. Un tel plan de numération est par ailleurs sans incidence sur le réseau 2.

Le paramétrage du fonctionnement du dispositif 8 peut également être réalisé à distance.

Par exemple, l'utilisateur de l'équipement 4 décroche le combiné et compose le numéro d'un serveur distant formant fournisseur de sonneries téléphoniques.

Le décroché du combiné de l'équipement 4 est détecté par le module 18 qui commande le relais 14 afin de permettre le raccordement entre cet équipement 4 et le réseau 2.

L'équipement 4 entre ensuite en communication avec le serveur distant de manière classique afin de permettre, par exemple, la sélection d'une pluralité de sonneries téléphoniques et éventuellement le paiement de ces sonneries.

Une fois la sélection effectuée, l'utilisateur raccroche l'équipement 4.

Le serveur distant émet alors un appel à l'intention du dispositif 8 en utilisant le numéro de téléphone de l'équipement 4.

La réception de l'appel provenant du réseau 2, débute par la réception de trames d'informations contenant notamment le numéro de l'appelant, c'est à dire dans ce cas du serveur distant, l'heure et des informations de signalisation.

A la réception, le module 16 de détection d'instructions de génération d'alertes identifie la nature de ces informations et commande le relais 14 de manière à permettre leur transmission à l'équipement 4 qui les traite de manière classique.

Ces trames d'informations de signalisation sont suivies d'instructions de génération d'alertes. Celles-ci sont détectées par le module 16 qui commande alors le relais 14 pour interrompre la liaison entre le réseau 2 et l'équipement 4.

Ainsi, les moyens de filtrage 10 extraient les instructions de génération d'alertes des informations reçues de manière à empêcher la mise en oeuvre des premiers moyens de génération d'alertes intégrés dans l'équipement 4.

Parallèlement, les trames d'informations de signalisation sont également reçues par le module 28 d'identification de l'appelant des seconds moyens 12 de génération d'alertes.

Ce module 28 reconnaît l'identifiant du serveur appelé précédemment et permet la mise en relation de ce serveur avec le module de communication 24 et notamment le modem qu'il contient.

Le module 24 de communication prend alors l'appel provenant du serveur distant et entame un échange d'informations avec celui-ci.

Le serveur distant transmet ainsi les sonneries sélectionnés précédemment par l'utilisateur au module de communication 24 pour leur enregistrement dans la mémoire de sonneries 26, par exemple sous la forme de fichiers informatiques au format dit « mp3 ».

Au cours de cet échange d'informations le relais 14 reste ouvert de sorte que la réception des fichiers informatiques de sonneries est sans incidence sur le fonctionnement de l'équipement 4.

L'utilisateur de l'équipement 4 peut ainsi télécharger une ou plusieurs sonneries dans le dispositif de génération d'alertes 8.

En variante, la sélection des sonneries et/ou le paramétrage du dispositif 8 est fait en accédant au serveur distant par exemple à partir d'un micro-ordinateur et au moyen d'un réseau de transfert d'informations tel que le réseau internet, pour amener le serveur distant à appeler le dispositif 8.

Dans encore un autre mode de réalisation, le serveur distant transmet au dispositif 8 les sonneries sous forme de messages écrits courts de type dit "SMS", contenant, sous la forme d'un fichier de type texte, une liste de notes à jouer.

De manière connue, la réception d'un tel SMS requiert uniquement des capacités de démodulation du type FSK au niveau du module de communication et un caractère spécifique peut indiquer la réception d'une sonnerie, ce caractère étant reconnu par le module 24 de communication.

Le contenu du SMS est alors mémorisé en vue de sa lecture ultérieure par exemple, par un synthétiseur formant haut parleur.

La reconnaissance du numéro d'appelant du serveur distant par le module 28 résulte par exemple de l'enregistrement de son numéro dans une liste prédéterminée ou encore d'un mode de fonctionnement particulier du dispositif imposé par l'utilisateur, par exemple, au moyen d'un interrupteur.

On va maintenant décrire le fonctionnement opérationnel du dispositif de l'invention.

Lorsque l'utilisateur de l'équipement téléphonique 4 décroche le combiné afin d'émettre un appel, le module 18 de détection de prise de ligne commande le relais 14 de manière à raccorder directement l'équipement 4 au réseau téléphonique 2 pour permettre l'émission d'un appel de manière classique.

Dans ce mode de fonctionnement, le dispositif 8 est sans incidence sur le fonctionnement de l'équipement 4.

Lors de la réception d'un appel téléphonique provenant du réseau 2, le module 16 de détection d'instructions de génération d'alertes identifie les premières trames de signalisation et commande le relais 14 de manière à permettre leur transmission vers l'équipement 4 qui les traite de manière classique. Ces trames d'informations de signalisation contiennent notamment le numéro de l'appelant qui peut être affiché par l'équipement 4.

Les trames d'informations de signalisation sont suivies d'instructions de génération d'alertes qui sont détectées par le module 16 de détection qui commande le relais 14 afin d'interrompre le raccordement entre le réseau 2 et l'équipement 4.

La sortie du module 16 de détection d'instructions de génération d'alertes est également reliée aux seconds moyens 12 de génération d'alertes de manière à permettre la prise en compte de ces instructions par ces seconds moyens 12 du dispositif 8 et notamment par le module 20 de pilotage.

Par l'intermédiaire du bus 34, le module 20 de pilotage vérifie auprès du module 28 d'identification de l'appelant si l'émetteur de l'appel reçu est soumis à des restrictions particulières, telles que par exemple un numéro interdit, ou encore un numéro déterminé et identifié pour le transfert de données tel que le serveur de sonnerie distant décrit précédemment.

Le module 20 de pilotage vérifie ensuite les conditions de fonctionnement auxquelles il est soumis en fonction par exemple, des paramètres enregistrés dans la mémoire de paramètres 32 et de l'horloge 30.

En fonction de toutes ces informations, le module 20 de pilotage commande le fonctionnement du haut-parleur 22. Par exemple un fichier informatique de sonnerie stocké dans la mémoire de sonneries 26 est transmis au haut-parleur 22 ainsi que des instructions de volume et de mode opératoire déterminées en fonction des paramètres mémorisés dans la mémoire 32 et de la référence temporelle donnée par l'horloge 30.

Le dispositif 8 se substitue ainsi aux premiers moyens d'alertes contenus dans l'équipement 4 et permet la génération d'une sonnerie dont notamment la nature et le volume sont adaptés au contexte de réception de l'appel.

Lorsque l'utilisateur alerté décroche le combiné de l'équipement 4 pour prendre l'appel, le module 18 de détection de prise de ligne commande le relais 14 de manière à raccorder l'équipement 4 au réseau 2. Ceci permet le fonctionnement de l'équipement 4 pour réaliser la prise de ligne et la transmission d'informations de voix.

Simultanément, la détection de prise de ligne est transmise aux seconds moyens 12 de génération d'alertes qui interrompent leur fonctionnement.

Dans un autre mode de réalisation, les seconds moyens de génération d'alertes comportent un module d'analyse du contexte d'appel afin de permettre une adaptation automatique du dispositif de génération d'alertes.

Par exemple, ce module comprend une mémoire dans laquelle chaque numéro appelant, et avantageusement appelé, est mémorisé et est associé à une pluralité de critères d'analyse du contexte d'appel.

Ces critères portent notamment sur la réciprocité du numéro, c'est-à-dire s'il est à la fois appelant et appelé, sur les tranches horaires d'appels, sur le nombre de sonneries avant la prise de ligne, sur un éventuel rejet de l'appel, et sur tout autre critère approprié.

Dans le mode de réalisation envisagé, le module d'analyse utilise une structure de données formée d'un tableau comportant trois colonnes et deux ensembles de lignes correspondant respectivement aux numéros appelants et aux numéros appelés.

Sur chaque ligne de ce tableau est noté un numéro de téléphone ainsi qu'un coefficient global de contexte et un indicateur de sonnerie, les numéros appelants et appelés étant mémorisés selon une file de type premier entré, premier sorti (FIFO).

Ainsi à chaque appel émis ou reçu, le numéro de téléphone est comparé aux numéros existants dans la structure de données.

Si le numéro n'est pas trouvé, il est enregistré dans le tableau, éventuellement en supprimant un autre numéro, et un coefficient global de contexte, calculé ainsi que cela est décrit plus loin, lui est affecté. Dans le cas d'un appel entrant, une sonnerie par défaut est attribuée à ce nouveau numéro.

Si le numéro existe déjà, la valeur de son coefficient global de contexte est enregistrée dans une mémoire tampon, puis ce coefficient global est mis à jour en fonction de règles déterminées d'analyse du contexte d'appel.

Ainsi chacun des critères tels que nombre d'occurrences d'appels, nombre de sonneries avant le décroché, heure d'appel, correspond à une ou plusieurs valeurs numériques qui sont additionnées pour former le coefficient global de contexte.

Dans le mode de réalisation décrit, la valeur finale de ce coefficient est obtenue par la moyenne du coefficient enregistré et du coefficient mis à jour.

En fonction de la valeur finale de ce coefficient, un indicateur de sonnerie est attribué à chaque numéro de téléphone du tableau.

Par exemple, le coefficient global de contexte varie entre 0 et 100 et six plages différentes correspondant chacune à une sonnerie différente sont définies.

Bien entendu d'autres règles de pilotage peuvent également être définies. Par exemple, un numéro dont les appels ont déjà été rejetés plusieurs fois au cours d'une même journée ne sera plus signalé, de même, un numéro appelant en dehors de sa tranche horaire habituelle sera signalé par une alerte différente de l'alerte utilisée habituellement.

Le module d'analyse permet ainsi l'adaptation des alertes générées en modifiant, en fonction du contexte de l'appel et de l'apprentissage effectué, la mélodie, l'amplitude, la fréquence ou tout autre caractéristique de l'alerte.

Le dispositif de l'invention permet donc la génération d'une alerte contextuelle adaptée automatiquement formant ainsi un auto-apprentissage du contexte d'appel.

Par ailleurs, dans les modes de réalisation décrits, les moyens de filtrage sont adaptés pour empêcher totalement la transmission des instructions de génération d'alertes entre le réseau et l'équipement téléphonique afin de permettre la génération d'alertes uniquement par les seconds moyens de génération d'alertes du dispositif.

Cependant, les moyens de filtrage peuvent également fonctionner de manière différente.

Par exemple, les moyens de filtrage sont adaptés pour dénombrer la réception d'instructions de génération d'alertes et empêcher la transmission d'un nombre prédéterminé de ces instructions. Ainsi, les seconds moyens de génération d'alertes ne sont substitués aux premiers moyens de génération d'alertes compris dans l'équipement téléphonique que durant le nombre prédéterminé de premières sonneries.

Notamment, dans le cas d'un équipement de type combiné téléphone - télécopieur, un tel mode de réalisation permet une connexion classique à l'issue du nombre prédéterminé de sonneries et la réception et le traitement de l'appel notamment par la partie télécopie de l'équipement.

En variante, les moyens de filtrage comportent également un module de génération de signaux de commandes à destination de l'équipement téléphonique.

La réception d'instructions de génération d'alertes entraîne alors le filtrage de ces instructions pour leur transmission aux seconds moyens de génération d'alertes ainsi que l'émission d'un signal de commande vers l'équipement téléphonique.

Par exemple, ce filtrage est réalisé en transmettant à l'équipement téléphonique le début des instructions de génération d'alertes afin d'amener les premiers moyens de génération d'alertes à émettre une courte alerte pour permettre notamment la localisation de cet équipement.

Un tel mode de réalisation peut également inclure un dénombrement de la réception des instructions de génération d'alertes afin de permettre périodiquement l'émission d'une telle alerte de localisation par l'équipement téléphonique.

Il apparaît donc que le dispositif de génération d'alertes 8 de l'invention permet, pour un faible coût et sans modification de l'équipement téléphonique existant, de réaliser un paramétrage des alertes en fonction du contexte d'appel et notamment du numéro de l'appelant, de l'heure de l'appel, des choix de l'utilisateur et de tout autre paramètre approprié.

Le dispositif 8 de l'invention permet en outre de conserver les fonctions existantes de l'équipement téléphonique 4 telles que par exemple l'affichage du numéro de l'appelant et autres, à l'exception des premiers moyens de génération d'alertes qui sont inhibés, totalement et/ou partiellement.

Dans le mode de réalisation décrit, l'alimentation en énergie électrique nécessaire au fonctionnement du dispositif 8 est assurée uniquement par le réseau 2 grâce à la différence de potentiel de l'ordre de 48 volts existant entre les fils formant la paire torsadée 6.

En variante, le dispositif 8 comporte une batterie rechargeable, alimentée uniquement par le réseau 2 et fournissant un complément d'énergie électrique.

Ainsi, l'absence de moyens d'alimentation spécifiques et une miniaturisation adéquate des composants permettent d'obtenir un dispositif 8 de faible coût et de faible encombrement.

Par exemple, ce dispositif 8 est intégré dans une prise téléphonique comportant un boîtier comprenant uniquement les moyens nécessaires à son fonctionnement, solidaire d'un connecteur de raccordement au réseau 2.

Avantageusement, cette prise téléphonique est une prise gigogne comportant un connecteur mâle et un connecteur femelle, de manière à être raccordée au réseau 2 et à l'équipement 4.

Bien entendu, les modules mis en oeuvre dans ce mode de réalisation peuvent être formés d'un ou plusieurs composants logiques ou conventionnels ou encore de composants programmés ou de micro-contrôleurs.

Par ailleurs, les alertes générées peuvent être des alertes de nature sonore, visuelle, tactile, olfactives ou autres.

Enfin, le dispositif de l'invention a été décrit en référence au réseau téléphonique commuté mais peut être mis en oeuvre sur d'autres types de réseaux téléphoniques tels que des réseaux téléphoniques numériques connus en France sous le nom de réseau xDSL, RNIS ou autres.

De même, le dispositif de l'invention peut prendre d'autres formes et être intégré dans un autre dispositif raccordé en série entre un réseau téléphonique et un équipement téléphonique.

Notamment, dans le cas d'un réseau haut débit multiplexé, tel que le réseau dit xDSL, le raccordement d'un équipement téléphonique requiert un dispositif spécifique de raccordement adapté pour séparer notamment les informations haut débit des informations de voix. Il apparaît donc avantageux d'intégrer le dispositif de génération d'alertes selon l'invention dans un tel dispositif de raccordement.

## Revendications

1. Dispositif de génération d'alertes perceptibles par un utilisateur raccordable en série entre un réseau téléphonique (2) et un équipement téléphonique (4) comprenant des premiers moyens de génération d'alertes perceptibles par un utilisateur, le dispositif (8) comportant :
- des moyens de filtrage (10) d'informations d'un appel téléphonique circulant entre ledit réseau (2) et ledit équipement téléphonique (4), lesdites informations comportant des informations de signalisation suivies d'instructions prédéterminées de génération d'alerte destinées audit équipement (4), lesdits moyens de filtrage (10) étant adaptés pour extraire au moins les instructions de génération d'alertes, et
- des seconds moyens (12) de génération d'alertes perceptibles par un utilisateur, distincts de ceux dudit équipement téléphonique (4) et dont le fonctionnement est déclenché en fonction desdites instructions de génération d'alertes extraites par lesdits moyens de filtrage (10), afin de permettre la génération d'alertes par lesdits seconds moyens (12) de génération d'alertes dudit dispositif (8),
lesdits moyens de filtrage (10) étant adaptés pour empêcher au moins partiellement la transmission desdites instructions prédéterminées de génération d'alertes de l'appel téléphonique vers ledit équipement (4), **caractérisé en ce que** lesdits moyens (10) de filtrage sont adaptés pour permettre la transmission des informations de signalisation de cet appel téléphonique entre ledit réseau (2) et ledit équipement (4), alors que la transmission des instructions de génération d'alertes de cet appel téléphonique est au moins partiellement empêchée.

2. Dispositif selon la revendication 1, **caractérisé en ce que** lesdits moyens de filtrage (10) sont adaptés pour empêcher la transmission desdites instructions prédéterminées de génération d'alertes vers ledit équipement (4) afin de permettre la génération d'alertes uniquement par lesdits seconds moyens (12) de génération d'alertes dudit dispositif (8).

3. Dispositif selon la revendication 1 ou 2, **caractérisé en ce que** lesdits moyens (10) de filtrage comportent des moyens de génération de signaux de commandes dudit équipement (4) afin de permettre la transmission de signaux de commandes vers ledit équipement (4) consécutivement à la réception et au filtrage desdites instructions prédéterminées de génération d'alertes.

4. Dispositif selon l'une quelconque des revendications 1 à 3, **caractérisé en ce que** lesdits moyens (10) de filtrage comportent des moyens (14) formant interrupteur commandable entre ledit réseau (2) et ledit équipement (4) et des moyens (16) de détection desdites instructions prédéterminées de génération d'alertes reliés auxdits moyens (14) formant interrupteur afin d'interrompre le raccordement entre ledit réseau (2) et ledit équipement (4) consécutivement à la détection de telles instructions, les moyens de détection (16) étant en outre aptes à identifier les informations de signalisation afin d'interrompre le raccordement entre le réseau (2) et l'équipement téléphonique (4).

5. Dispositif selon l'une quelconque des revendications 1 à 4, **caractérisé en ce que** lesdits moyens (10) de filtrage comportent des moyens (14) formant interrupteur commandable entre ledit réseau (2) et ledit équipement téléphonique (4) et des moyens (18) de détection de l'utilisation dudit équipement (4) reliés auxdits moyens (14) formant interrupteur commandable afin de permettre le raccordement dudit équipement (4) audit réseau (2) lors de la détection de l'utilisation dudit équipement (4).

6. Dispositif selon l'une quelconque des revendications 1 à 5, **caractérisé en ce qu'**il comporte des moyens (20) paramétrables de pilotage du fonctionnement desdits seconds moyens (12) de génération d'alertes.

7. Dispositif selon la revendication 6, **caractérisé en ce qu'**il comporte des moyens (28) d'identification d'un appelant adaptés pour identifier ledit équipement (4), afin de permettre la détermination de paramètres de fonctionnement desdits seconds moyens (12) de génération d'alertes à partir dudit équipement (4).

8. Dispositif selon la revendication 6, **caractérisé en ce qu'**il comporte des moyens (28) d'identification d'un appelant et des moyens (24) de communication à distance afin de permettre des échanges d'informations au moyen dudit réseau (2) avec un ou plusieurs équipements distants déterminés pour la détermination de paramètres de fonctionnement desdits seconds moyens (12) de génération d'alertes.

9. Dispositif selon la revendication 6, **caractérisé en ce qu'**il comporte des moyens de génération d'une référence temporelle (30) pour le pilotage de son fonctionnement en fonction de cette référence temporelle.

10. Dispositif selon la revendication 6, **caractérisé en ce qu'**il comporte des moyens d'analyse du contexte d'appel adaptés pour déterminer des paramètres de pilotage du fonctionnement desdits seconds moyens (12) de génération d'alertes par l'analyse du contexte d'appel des appels émis et/ou reçus.

11. Dispositif selon l'une quelconque des revendications 1 à 10, **caractérisé en ce qu'**il comporte des moyens (22) d'émission d'alertes sonores, visuelles, olfactives et/ou tactiles.

12. Dispositif selon la revendication 11, **caractérisé en ce que** lesdits seconds moyens (12) de génération d'alertes comportent une mémoire (26) de sonneries comprenant une ou plusieurs sonneries pouvant être lues par des moyens (22) d'émission d'alertes sonores.

13. Dispositif selon l'une quelconque des revendications 1 à 12, **caractérisé en ce qu'**il est adapté pour être alimenté en énergie électrique uniquement à partir dudit réseau téléphonique (2).

14. Dispositif selon l'une quelconque des revendications 1 à 13, **caractérisé en ce qu'**il comporte une batterie rechargeable, destinée à fournir un complément de puissance pour son fonctionnement et connectée audit réseau téléphonique (2) pour sa recharge.

15. Dispositif selon l'une quelconque des revendications 1 à 14, **caractérisé en ce qu'**il est intégré dans une prise téléphonique gigogne.

16. Système de génération d'alertes perceptibles par un utilisateur du type comprenant un réseau téléphonique (2) et un équipement téléphonique (4), **caractérisé en ce qu'**il comporte un dispositif de génération d'alertes selon l'une quelconque des revendications 1 à 15 raccordé en série entre ledit réseau (2) et ledit équipement (4).

## Claims

1. User-perceptible alerts generation device, connectable in series between a telephone network (2) and telephone equipment (4) comprising first means for generating alerts perceptible by a user, the device 8 comprising
- means for filtering (10) information of a telephone call travelling between the said network (2) and the said telephone equipment (4), the said information comprising signalling information followed by predetermined instructions for generating an alert which are intended for the said equipment (4), the said filtering means (10) being designed to extract at least the alert-generating instructions, and
- second means (12) for generating alerts perceptible by a user, distinct from the means of the said telephone equipment (4) and whose operation is triggered as a function of the said instructions for generating alerts extracted by the said filtering means (10) so as to allow the generation of alerts by the said second means (12) for generating alerts of the said device (8),
the said filtering means (10) being designed to prevent at least partially the transmission of the said predetermined instructions for generating alerts of the telephone call to the said equipment (4), **characterized in that** the said means (10) for filtering are designed to allow the transmission of the signalling information of this telephone call between the said network (2) and the said equipment (4), while the transmission of the instructions for generating alerts of this telephone call is at least partially prevented.

2. Device according to Claim 1, **characterized in that** the said filtering means (10) are designed to prevent the transmission of the said predetermined instructions for generating alerts to the said equipment (4) so as to allow the generation of alerts only by the said second means (12) for generating alerts of the said device (8).

3. Device according to Claim 1 or 2, **characterized in that** the said filtering means (10) comprise means for generating control signals of the said equipment (4) so as to allow the transmission of control signals to the said equipment (4) consequent upon the receipt and the filtering of the said predetermined instructions for generating alerts.

4. Device according to any one of Claims 1 to 3, **characterized in that** the said filtering means (10) comprise means (14) forming a controllable breaker between the said network (2) and the said equipment (4) and means (16) for detecting the said predetermined instructions for generating alerts linked to the said means (14) forming a breaker so as to break the connection between the said network (2) and the said equipment (4) consequent upon the detection of such instructions, the detection means (16) being furthermore able to identify the signalling information so as to break the connection between the network (2) and the telephone equipment (4).

5. Device according to any one of Claims 1 to 4, **characterized in that** the said filtering means (10) comprise means (14) forming a controllable breaker between the said network (2) and the said telephone equipment (4) and means (18) for detecting of the use of the said equipment (4) which are linked to the said means (14) forming a controllable breaker so as to allow the connection of the said equipment (4) to the said network (2) upon the detection of the use of the said equipment (4).

6. Device according to any one of Claims 1 to 5, **characterized in that** it comprises parametrizable means (20) for driving the operation of the said second means (12) for generating alerts.

7. Device according to Claim 6, **characterized in that** it comprises means (28) for identifying a caller that are designed to identify the said equipment (4), so as to allow the determination of operating parameters of the said second means (12) for generating alerts on the basis of the said equipment (4).

8. Device according to Claim 6, **characterized in that** it comprises means (28) for identifying a caller and means (24) for remote communication so as to allow exchanges of information by means of the said network (2) with one or more determined remote items of equipment for the determination of operating parameters of the said second means (12) for generating alerts.

9. Device according to Claim 6, **characterized in that** it comprises means for generating a time reference (30) for the driving of the operation thereof as a function of this time reference.

10. Device according to Claim 6, **characterized in that** it comprises means for analysing the call context which are designed to determine parameters for driving the operation of the said second means (12) for generating alerts by the analysis of the call context of the calls sent and/or received.

11. Device according to any one of Claims 1 to 10, **characterized in that** it comprises means (22) for sending audible, visual, olfactory and/or tactile alerts.

12. Device according to Claim 11, **characterized in that** the said second means (12) for generating alerts comprise a memory (26) of ring tones comprising one or more ring tones that can be read by means (22) for sending audible alerts.

13. Device according to any one of Claims 1 to 12, **characterized in that** it is designed to be electrically energized only from the said telephone network (2).

14. Device according to any one of Claims 1 to 13, **characterized in that** it comprises a rechargeable battery, intended to provide extra power for the operation thereof and connected to the said telephone network (2) for the recharging thereof.

15. Device according to any one of Claims 1 to 14, **characterized in that** it is integrated into a telephone plug adaptor.

16. System for generating alerts perceptible by a user of the type comprising a telephone network (2) and telephone equipment (4), **characterized in that** it comprises a device for generating alerts according to any one of Claims 1 to 15, connected in series between the said network (2) and the said equipment (4).

## Patentansprüche

1. Vorrichtung zur Erzeugung von von einem Benutzer wahrnehmbaren Alarmen, die in Reihe zwischen einem Telefonnetz (2) und einer Telefonanlage (4) angeschlossen werden kann, welche erste Mittel zur Erzeugung von von einem Benutzer wahrnehmbaren Alarmen aufweist, wobei die Vorrichtung (8) umfasst:
- Mittel (10) zur Filterung von Informationen eines Telefonanrufs, der zwischen dem Netz (2) und der Telefonanlage (4) zirkuliert, wobei die Informationen Signalisationsinformationen gefolgt von vorbestimmten Alarmerzeugungsbefehlen enthalten, die für die Anlage (4) bestimmt sind, wobei die Filterungsmittel (10) ausgelegt sind, um zumindest die Alarmerzeugungsbefehle zu extrahieren, und
- zweite Mittel (12) zur Erzeugung von von einem Benutzer wahrnehmbaren Alarmen, die sich von denjenigen der Telefonanlage (4) unterscheiden und deren Betrieb in Abhängigkeit von den Alarmerzeugungsbefehlen ausgelöst wird, die von den Filterungsmitteln (10) extrahiert werden, um die Erzeugung von Alarmen durch die zweiten Alarmerzeugungsmittel (12) der Vorrichtung (8) zu ermöglichen,
wobei die Filterungsmittel (10) ausgelegt sind, um zumindest teilweise die Übertragung der vorbestimmten Alarmerzeugungsbefehle des Telefonanrufs zu der Anlage (4) zu verhindern, **dadurch gekennzeichnet, dass** die Filterungsmittel (10) ausgelegt sind, um die Übertragung der Signalisationsinformationen dieses Telefonanrufs zwischen dem Netz (2) und der Anlage (4) zu erlauben, während die Übertragung der Alarmerzeugungsbefehle dieses Telefonanrufs zumindest teilweise verhindert wird.

2. Vorrichtung nach Anspruch 1, **dadurch gekennzeichnet, dass** die Filterungsmittel (10) ausgelegt sind, um die Übertragung der vorbestimmten Alarmerzeugungsbefehle zur Anlage (4) zu verhindern, um die Erzeugung von Alarmen nur durch die zweiten Alarmerzeugungsmittel (12) der Vorrichtung (8) zu erlauben.

3. Vorrichtung nach Anspruch 1 oder 2, **dadurch gekennzeichnet, dass** die Filterungsmittel (10) Mittel zur Erzeugung von Steuersignalen der Anlage (4) aufweisen, um die Übertragung von Steuersignalen zur Anlage (4) nach dem Empfang und der Filterung der vorbestimmten Alarmerzeugungsbefehle zu ermöglichen.

4. Vorrichtung nach einem der Ansprüche 1 bis 3, **dadurch gekennzeichnet, dass** die Filterungsmittel (10) Mittel (14), die einen steuerbaren Unterbrecher zwischen dem Netz (2) und der Anlage (4) bilden, und Mittel (16) zur Erfassung der vorbestimmten Alarmerzeugungsbefehle aufweisen, die mit den einen Unterbrecher bildenden Mitteln (14) verbunden sind, um die Verbindung zwischen dem Netz (2) und der Anlage (4) nach der Erfassung solcher Befehle zu unterbrechen, wobei die Erfassungsmittel (16) außerdem in der Lage sind, die Signalisationsinformationen zu identifizieren, um die Verbindung zwischen dem Netz (2) und der Telefonanlage (4) zu unterbrechen.

5. Vorrichtung nach einem der Ansprüche 1 bis 4, **dadurch gekennzeichnet, dass** die Filterungsmittel (10) Mittel (14), die einen steuerbaren Unterbrecher zwischen dem Netz (2) und der Telefonanlage (4) bilden, und Mittel (18) zur Erfassung der Benutzung der Anlage (4) aufweisen, die mit den einen steuerbaren Unterbrecher bildenden Mitteln (14) verbunden sind, um die Verbindung der Anlage (4) mit dem Netz (2) bei der Erfassung der Benutzung der Anlage (4) zu ermöglichen.

6. Vorrichtung nach einem der Ansprüche 1 bis 5, **dadurch gekennzeichnet, dass** sie parametrierbare Mittel (20) zur Steuerung des Betriebs der zweiten Alarmerzeugungsmittel (12) aufweist.

7. Vorrichtung nach Anspruch 6, **dadurch gekennzeichnet, dass** sie Mittel (28) zur Identifizierung eines Anrufers aufweist, die ausgelegt sind, um die Anlage (4) zu identifizieren, um die Bestimmung von Betriebsparametern der zweiten Alarmerzeugungsmittel (12) ausgehend von der Anlage (4) zu erlauben.

8. Vorrichtung nach Anspruch 6, **dadurch gekennzeichnet, dass** sie Mittel (28) zur Identifizierung eines Anrufers und Mittel (24) zur Fernkommunikation aufweist, um Informationsaustauschvorgänge über das Netz (2) mit einer oder mehreren bestimmten fernen Anlagen zur Bestimmung von Betriebsparametern der zweiten Alarmerzeugungsmittel (12) zu erlauben.

9. Vorrichtung nach Anspruch 6, **dadurch gekennzeichnet, dass** sie Mittel zur Erzeugung eines zeitlichen Bezugs (30) zur Steuerung ihres Betriebs in Abhängigkeit von diesem zeitlichen Bezug aufweist.

10. Vorrichtung nach Anspruch 6, **dadurch gekennzeichnet, dass** sie Mittel zur Analyse des Anrufkontexts aufweisen, die ausgelegt sind, um durch die Analyse des Anrufkontexts der gesendeten und/oder empfangenen Anrufe Steuerparameter des Betriebs der zweiten Alarmerzeugungsmittel (12) zu bestimmen.

11. Vorrichtung nach einem der Ansprüche 1 bis 10, **dadurch gekennzeichnet, dass** sie Mittel (22) zur Aussendung von akustischen, visuellen, Geruchs- und/oder Berührungsalarmen aufweisen.

12. Vorrichtung nach Anspruch 11, **dadurch gekennzeichnet, dass** die zweiten Alarmerzeugungsmittel (12) einen Speicher (26) von Klingeltönen aufweisen, der einen oder mehrere Klingeltöne enthält, die von Mitteln (22) zur Aussendung von akustischen Alarmen gelesen werden können.

13. Vorrichtung nach einem der Ansprüche 1 bis 12, **dadurch gekennzeichnet, dass** sie ausgelegt ist, um nur ausgehend vom Telefonnetz (2) mit elektrischer Energie versorgt zu werden.

14. Vorrichtung nach einem der Ansprüche 1 bis 13, **dadurch gekennzeichnet, dass** sie eine wiederaufladbare Batterie aufweist, die dazu bestimmt ist, eine Leistungsergänzung für ihren Betrieb zu liefern und für ihr Wiederaufladen mit dem Telefonnetz (2) verbunden wird.

15. Vorrichtung nach einem der Ansprüche 1 bis 14, **dadurch gekennzeichnet, dass** sie in einen Telefon-Zwischenstecker integriert ist.

16. System zur Erzeugung von durch einen Benutzer wahrnehmbaren Alarmen von dem Typ, der ein Telefonnetz (2) und eine Telefonanlage (4) aufweist, **dadurch gekennzeichnet, dass** es eine Alarmerzeugungsvorrichtung nach einem der Ansprüche 1 bis 15 aufweist, die zwischen dem Netz (2) und der Anlage (4) in Reihe geschaltet ist.
